# NEUE EUROPÄISCHE PATENTSCHRIFT

(11) **EP 3 056 076 B2**
(45) Veröffentlichungstag und Bekanntmachung des Hinweises auf die Entscheidung über den Einspruch: **22.07.2020**
(45) Hinweis auf die Patenterteilung: 29.11.2017
(21) Anmeldenummer: 16150370.1
(22) Anmeldetag: 07.01.2016
(51) Int. Cl.: A01D 41/127

(54) **VERFAHREN ZUR BESTIMMUNG VON KALIBRIERUNGSDATEN FÜR EINEN KORNVERLUSTSENSOR**
METHOD FOR DETERMINING CALIBRATION DATA FOR A GRAIN LOSS SENSOR
PROCEDE DE DETERMINATION DE DONNEES D'ETALONNAGE POUR UN CAPTEUR DE PERTE DE GRAINS

(30) Priorität: 12.02.2015 DE 102015102056
(43) Veröffentlichungstag der Anmeldung: 17.08.2016
(73) Patentinhaber: CLAAS Selbstfahrende Erntemaschinen GmbH, 33428 Harsewinkel (DE)
(72) Erfinder: Baumgarten, Joachim, 48361 Beelen (DE); Heitmann, Christoph, 48231 Warendorf (DE); Neu, Sebastian, 49196 Bad Laer (DE); Feldotto, Benedikt, 33397 Rietberg (DE)
(74) Vertreter: CLAAS Gruppe

(56) Entgegenhaltungen:
- EP-A1- 0 908 087
- EP-A1- 1 321 024
- EP-A1- 1 609 349
- EP-A1- 1 736 044
- EP-A1- 2 186 389
- EP-A1- 2 591 654
- EP-A2- 2 742 791
- WO-A1-99/41967
- DE-C2- 19 820 819

## Beschreibung

Die Erfindung betrifft ein Verfahren zur Bestimmung von Kalibrierungsdaten für einen Kornverlustsensor an einem Mähdrescher mit den Merkmalen des Oberbegriffs von Anspruch 1.

Im Erntebetrieb eines Mähdreschers fallen als Kornverluste diejenigen Körner des aufgenommenen Erntegutstroms an, welche entweder gar nicht erst wirksam aus dem Stroh ausgedroschen wurden oder trotz Ausdrusch von dem Dreschwerk oder von der Reinigungsanordnung des Mähdreschers nicht - wie eigentlich gewünscht - weiter in den Korntank gefördert wurden, sondern, wie das ausgedroschene Stroh, von dem Mähdrescher auf dem Feld hinterlassen werden. Dabei hängen diese nach Möglichkeit klein zu haltenden Kornverluste einerseits von der Fahrgeschwindigkeit und den Betriebseinstellungen insbesondere des Dreschwerks des Mähdreschers und andererseits von Umgebungsbedingungen ab wie der Beschaffenheit des Ernteguts und des Feldes, z. B. hinsichtlich Feuchtigkeit und Bestandsdichte. Es gibt also nicht unveränderliche und optimale Einstellungen für das Dreschwerk für alle Randbedingungen, vielmehr müssen diese zur Verringerung oder Minimierung der Kornverluste gemäß der obigen Umgebungsbedingungen und der Fahrgeschwindigkeit angepasst werden.

Gleichzeitig existieren regelmäßig wirtschaftliche Vorgaben bezüglich eines maximalen Kornverlustes, der bei der Ernte eines Feldes nicht überschritten werden soll und welcher als Anteil an den Gesamtkörnern oder durch eine andere Metrik angegeben werden kann. Dabei ist es zusätzlich wirtschaftlich oft sinnvoll oder gefordert, bei Einhaltung des maximalen Kornverlusts gleichzeitig die Erntedauer zu minimieren - was z. B. durch Erhöhung der Fahrgeschwindigkeit möglich wäre - oder den Energieverbrauch des Dreschwerks zu verringern, wobei diese beiden Vorgaben in einem gewissen Zielkonflikt zu den Kornverlusten stehen. Der Fahrer des Mähdreschers ist also regelmäßig bestrebt, den Mähdrescher knapp unterhalb der vorgegebenen Kornverlustgrenze zu betreiben.

Dabei gestaltet sich die für eine solche Anpassung wichtige Bestimmung der aktuellen Kornverluste bei dem Erntevorgang bisher als schwierig. Einerseits ist es aus dem Stand der Technik bekannt, dass der Fahrer des Mähdreschers oder eine Hilfsperson auf dem Feld zwischen dem von dem Mähdrescher hinterlassenen Stroh und Spreu die Dichte oder Menge der ebenfalls hinterlassenen Verlustkörner qualitativ erfasst. Es liegt auf der Hand, dass diese Methode sowohl umständlich als auch ungenau ist und eine Anpassung der Einstellungen des Mähdreschers mit neuerlicher Messung insbesondere zeitaufwändig ist. Eine nur geringfügige Verbesserung dieses Prinzips stellt der Einsatz von Prüfschalen zur Aufnahme von Verlustkörnern dar, welche entweder von dem Mähdrescher zu bestimmten Zeiten abgelegt werden oder von einer Hilfsperson manuell zum Auffangen des Kornverlustes platziert werden.

Ebenso sind aus dem Stand der Technik am Mähdrescher angeordnete Kornverlustsensoren bekannt, welche z. B. in der Umgebung einer Schüttlerhorde des Dreschwerks angeordnet sind und dabei anhand des erfassten Aufprallverhaltens herunterfallender Körner die Kornverluste bestimmen sollen. Unter dem Begriff der Kornverluste wird hier und nachfolgend entweder ein Absolutbetrag an Kornverlusten, z. B. ausgedrückt in Kornvolumen oder Kornmasse pro Feldflächeneinheit, oder ein relativer, auf eine andere Größe bezogener Betrag, verstanden.

Problematisch bei diesen Kornverlustsensoren ist, dass ein Bezug zwischen den vom Kornverlustsensor gemessenen Werten und den tatsächlichen Kornverlusten nur schwer herzustellen ist. Denn die Relation zwischen den vom Kornverlustsensor gemessenen Werten - welche hier und nachfolgend Sensor-Kornverlustwerte genannt werden und das von dem Kornverlustsensor erzeugte Messsignal als solches bezeichnen - mit den tatsächlichen Kornverlusten hängt ebenfalls sehr stark von dem Erntegutstromvolumen insgesamt sowie von den oben genannten Umgebungsbedingungen ab, sodass die Kalibrierung der Kornverlustsensoren zur Ermittlung der tatsächlichen Kornverluste schwierig ist.

Die als nächstkommend angesehene Patentschrift DE 198 20 819 C2 beschreibt nun die Möglichkeit, durch Auswertung der obigen Prüfschalen die Kornverlustsensoren zu kalibrieren, doch begrenzt die sehr ungenaue Zuordnung der Messwerte der Kornverlustsensoren zu der Auswertung der Prüfschalen die Präzision der Kalibrierung. Zudem ist das Verfahren sehr zeitaufwendig.

Ausgehend von diesem Stand der Technik besteht die Aufgabe der Erfindung darin, ein Verfahren zur Bestimmung von verbesserten Kalibrierungsdaten für einen Kornverlustsensor an einem Mähdrescher bereitzustellen.

Das obige Problem wird bei einem Verfahren zur Bestimmung von Kalibrierungsdaten für einen Kornverlustsensor an einem Mähdrescher mit den Merkmalen des Oberbegriffs von Anspruch 1 durch die Merkmale des kennzeichnenden Teils von Anspruch 1 gelöst.

Wesentlich für die Erfindung ist die Erkenntnis, dass die Kalibrierung eines solchen Kornverlustsensors dann besonders genau erfolgen kann, wenn die von dem Kornverlustsensor gemessenen Sensor-Kornverlustwerte mit den tatsächlich ermittelten Kornverlusten abgeglichen werden können. Mit anderen Worten kann eine Messung tatsächlicher Kornverlustmengen - etwa auf dem Feld unter dem hinterlassenen Stroh und der hinterlassenen Spreu oder in einer Prüfschale - erfolgen und dieser Messung können die entsprechenden Messwerte - also Sensor-Kornverlustwerte - des Kornverlustsensors zugeordnet werden. Auf diese Weise kann dann einem Sensor-Kornverlustwert ein tatsächlicher Kornverlust zugeordnet werden, wodurch die gewünschten genauen Kalibrierungsdaten für den Kornverlustsensor bestimmbar sind. Die Zuordnung einer gemessenen Kornverlustmenge zu einem Sensor-Kornverlustwert kann dann mithilfe von Messmarken erfolgen, welche jeweils sowohl der Kornverlustmenge und dem Sensor-Kornverlustwert zugeordnet sind, etwa eine Position oder eine Zeit angeben, und damit eine wechselseitige Zuordnung ermöglichen.

Die bevorzugten Ausgestaltungen der Unteransprüche 2 und 3 betreffen dabei eine Kalibrierung zur Bestimmung eines prozentualen Verlustanteils an einem Korngesamtdurchsatz des Mähdreschers.

Die Erfindung sieht vor, dass die Messmarken zur wechselseitigen Zuordnung der Sensor-Kornverlustwerte zu den gemessenen Kornverlustmengen eine Positionsinformation zu der Position des Mähdreschers umfassen. Mittels einer solchen Positionsinformation lassen sich nicht nur die gemessenen Werte zueinander, sondern auch einer Feldposition zuordnen. Dies ist vorteilhaft, weil relevante Feldbeschaffenheiten ebenfalls positionsabhängig unterschiedlich sein können, sodass auch die Kalibrierungsdaten positionsabhängig sein können, was speziell von dem Unteranspruch 6 berücksichtigt wird.

Die Erfindung sieht die Verwendung einer Zeitinformation bei der Messmarke vor, was vorteilhafterweise die Zuordnungsgenauigkeit weiter erhöhen kann.

Das Bestimmen der Kalibrierungsdaten kann auch gemäß dem Unteranspruch 8 auf einem Zentralrechner ausgeführt werden, welcher vorzugsweise stationär und separat von dem Mähdrescher angeordnet sein kann und an den die Messdaten übertragen werden können. Auf diese Weise lässt sich eine Vielzahl an Informationen zentral bündeln und ggf. an mehrere Mähdrescher verteilen, was von Unteranspruch 13 beschrieben wird. Es darf jedoch grundsätzlich darauf hingewiesen werden, dass der Begriff "Zentralrechner" hier weit auszulegen ist, so dass der Zentralrechner beliebig verortet und insbesondere als mobile Einheit, insbesondere als Smartdevice o. dgl., ausgestaltet sein kann.

Die Unteransprüche 11 und 12 schließlich sehen die Verwendung einer Prüfschale zur Messung der Kornverlustmengen vor.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine schematische Seitenansicht eines Mähdreschers für das vorschlagsgemäße Verfahren,
- Fig. 2: eine schematische Ansicht eines Feldes während der Bearbeitung durch einen Mähdrescher im Erntebetrieb und während der Ausführung des vorschlagsgemäßen Verfahrens und
- Fig. 3a-d: bei der Ausführung des vorschlagsgemäßen Verfahrens vorgenommene beispielhafte Messverläufe.

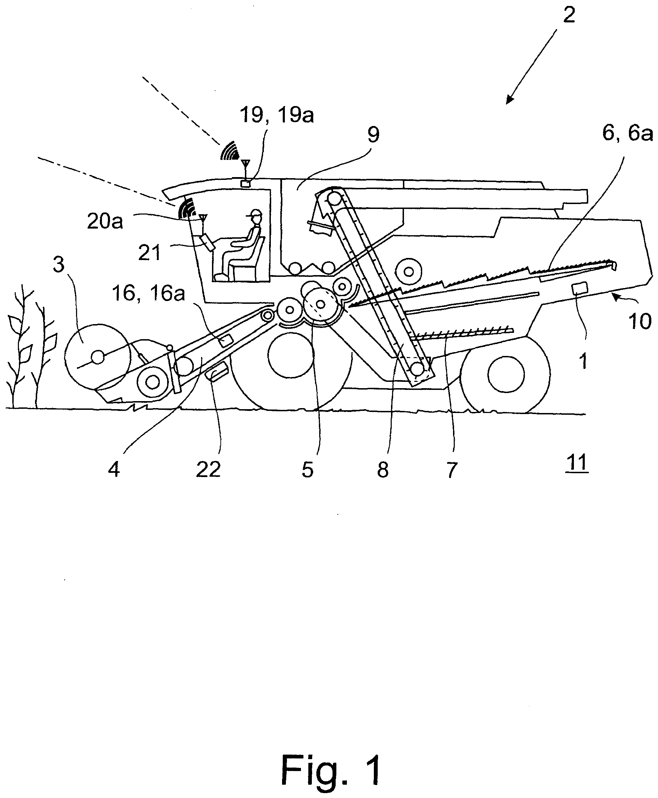

Das vorschlagsgemäße Verfahren dient dem Bestimmen von Kalibrierungsdaten für einen Kornverlustsensor 1 an einem Mähdrescher 2. Ein solcher Mähdrescher 2 ist in einer schematischen Seitenansicht in der Fig. 1 dargestellt. Der Mähdrescher 2 weist in an sich aus dem Stand der Technik bekannter Weise ein Schneidwerk 3, einen Schrägförderer 4, eine Dreschanordnung 5, eine Abscheideanordnung 6, eine Reinigungsanordnung 7, eine Transportanordnung 8 und einen Korntank 9 auf, wobei der aufgenommene Erntegutstrom bzw. der Korngutstrom durch diese Abschnitte des Mähdreschers 2 prozesstechnisch im Wesentlichen in der genannten Reihenfolge gefördert wird.

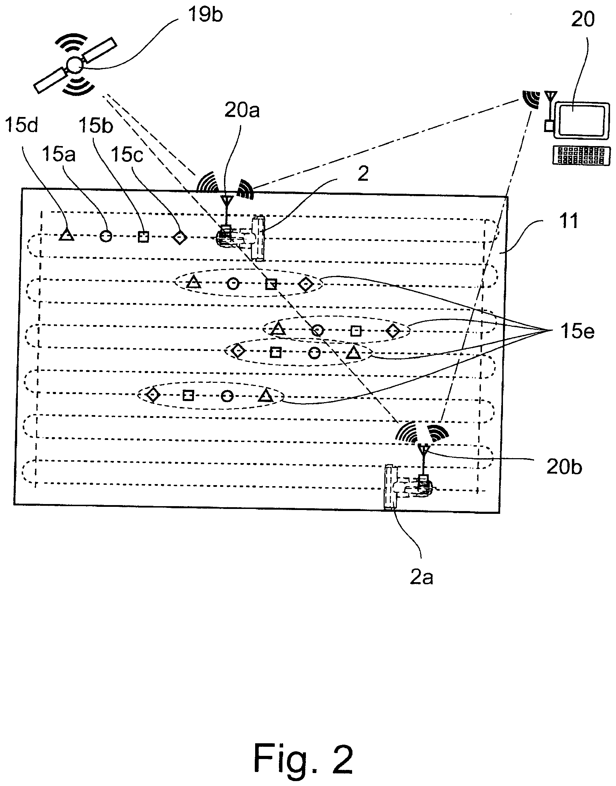

Genauer gesagt soll in der Dreschanordnung 5 und der Abscheideanordnung 6 das Korngut von dem Erntegut im Übrigen getrennt werden, wobei das getrennte Korngut in der Reinigungsanordnung 7 eine Säuberung insbesondere von Spreu und anderen Nichtkornbestandteilen erfährt und anschließend das somit gereinigte Korngut mittels der Transportanordnung 8 dem Korntank 9 zugeführt wird. Das Stroh und die Spreu werden dann an dem Heck 10 des Mähdreschers 2 abgelegt bzw. treten an dem entsprechenden Ende der Abscheideanordnung 6, welche längs ausgerichtete Schüttlerhorden 6a umfassen kann, aus dem Mähdrescher 2 und gelangen auf das Feld 11. Eine beispielhafte Position des Mähdreschers 2 auf dem Feld in einer schematischen Draufsicht ist in der Fig. 2 zu erkennen.

Der in Rede stehende Kornverlustsensor 1 ist grundsätzlich aus dem Stand der Technik bekannt und wird vorliegend nicht im Detail in der Zeichnung wiedergegeben. Beispielhaft weist der Kornverlustsensor 1, welcher gemäß der Darstellung der Fig. 1 an einem Heckende der Abscheideanordnung 6 und speziell unterhalb der Schüttlerhorden 6a angeordnet ist, ein Sensorblech und einen Vibrationssensor auf, welcher das Aufprallen von Körnern erfasst, die etwa von den Schüttlerhorden 6a herunterfallen und auf das Sensorblech treffen. Der Kornverlustsensor 1 kann auch eine mehrteilige Sensoranordnung nach dem soeben beschriebenen oder nach einem anderen Messprinzip umfassen. Diese mehreren Teile der Sensoranordnung können dann verteilt entlang der oben beschriebenen Förderstrecke, insbesondere entlang der Dreschanordnung 5 und der Abscheideanordnung 6, angeordnet sein. Die mehreren Teile eines solchen mehrteiligen Kornverlustsensors 1 können gleichermaßen auch quer zu dieser Förderstrecke - und damit quer zu einer Längsrichtung des Mähdreschers 2 - beabstandet angeordnet sein. Auf die diesbezüglichen konstruktiven Einzelheiten kommt es vorliegend nicht weiter an.

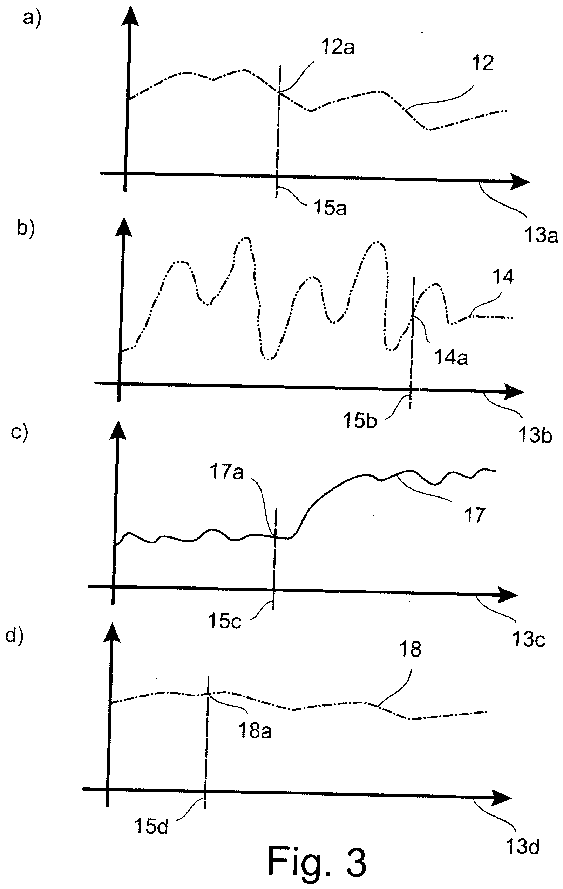

Im vorschlagsgemäßen Verfahren werden Kornverlustmengen 12 gemessen, welche von dem Mähdrescher 2 bei einem Erntebetrieb hinterlassen wurden. Eine entsprechende Darstellung zeigen die Fig. 3a-d. Dies entspricht dem oben bereits beschriebenen Vorgang, wobei dieses Hinterlassen sowohl kontinuierlich bzw. quasi-kontinuierlich als auch in Intervallen erfolgen kann. Ein Verlauf der gemessenen Kornverlustmengen 12 entlang einer Zeitachse 13a ist beispielhaft in der Fig. 3a dargestellt. Da zum Zeitpunkt der Messung der Kornverlustmengen 12 die entsprechenden Körner bereits den Mähdrescher 2 verlassen haben, kann diese Messung - was die Zahl oder eine sonstige Quantität der verlorenen Körner angeht - durch Vorsehen einer längeren Messzeit sehr genau durchgeführt werden.

Ebenso werden im vorschlagsgemäßen Verfahren von dem Kornverlustsensor 1 während des Erntebetriebs Sensor-Kornverlustwerte 14 gemessen. Daher handelt es sich bei dieser Messung um eine Messung während des Betriebs und ebenso um eine Messung einer sich zeitlich laufend verändernden Größe. Beispielhaft ist der Verlauf der Sensor-Kornverlustwerte 14 entlang einer Zeitachse 13b in der Fig. 3b wiedergegeben. Es ist zu bemerken, dass gemäß der oben beschriebenen Funktionsweise der Kornverlustsensor 1 nicht ohne Weiteres und direkt die quantitativ genaue Menge an Kornverlusten erfassen kann. Das liegt nicht nur daran, dass ohnehin nicht alle verlorenen Körner überhaupt in den Erfassungsbereich des Kornverlustsensors 1 gelangen, sondern auch daran, dass - wie bereits festgestellt - der Zusammenhang zwischen den gemessenen Sensor-Kornverlustwerten 14 und der tatsächlichen Menge an verlorenen Körnern sehr unterschiedlich sein kann. Es ist daher darauf hinzuweisen, dass mit den Sensor-Kornverlustwerten 14 speziell die von dem Kornverlustsensor 1 als Messwerte erzeugten Signale gemeint sind.

Die Kalibrierungsdaten im Sinne des vorschlagsgemäßen Verfahrens dienen daher dazu, diese Sensor-Kornverlustwerte 14 zu den tatsächlichen Verlusten an Körnern, die den Sensor-Kornverlustwerten 14 entsprechen, in Bezug zu setzen. In eben diesem Sinne ist damit vorliegend der Begriff der "Kalibrierung" zu verstehen. Es wird darauf hingewiesen, dass keinesfalls eine kontinuierliche Messung der Kornverlustmengen 12 oder der Sensor-Kornverlustwerte 14 gemäß der in den Fig. 3a, b kontinuierlich dargestellten Verläufe erforderlich ist. Vielmehr können einzelne oder alle Messungen auch zu diskreten Zeitpunkten erfolgen.

Das vorschlagsgemäße Verfahren ist nun dadurch gekennzeichnet, dass den gemessenen Kornverlustmengen 12 und den gemessenen Sensor-Kornverlustwerten 14 jeweils Messmarken 15a, b zugeordnet werden und dass basierend auf einem Abgleich der gemessenen Kornverlustmengen 12 mit den gemessenen Sensor-Kornverlustwerten 14 gemäß der Messmarken 15a,b die Kalibrierungsdaten für den Kornverlustsensor 1 bestimmt werden. In den Fig. 3a, b ist vorliegend beispielhaft nur jeweils eine Messmarke 15a, b entsprechend einem einzelnen Messwert für die Kornverlustmengen 12 - der Kornverlustmenge 12a - und für die Sensor-Kornverlustwerte 14 - dem Sensor-Kornverlustwert 14a - dargestellt. Die Zuordnung der Messmarken 15a, b kann sich dabei wie hier dargestellt auf einen einzelnen, also augenblicklichen, Messwert der Kornverlustmengen 12 oder der Sensor-Kornverlustwerte 14 beziehen oder, insbesondere im Hinblick auf die Sensor-Kornverlustwerte 14, auch auf ein ganzes Zeitintervall an gemessenen Werten. Ferner können insbesondere die Sensor-Kornverlustwerte 14 auch eine gewisse Mittelung oder sonstige Filterung erfahren haben und sind dementsprechend nicht notwendigerweise "roh". Der Begriff der "Messmarke" ist hier und nachfolgend weit zu verstehen. Insbesondere kann darunter jedwede Information verstanden werden, welche mindestens einen Messvorgang - mit dem jeweiligen gemessenen Wert - identifiziert und damit einen Vergleich oder Abgleich mit und vor allem eine Zuordnung zu anderen Messvorgängen anhand ihrer Messmarken erlaubt. Es können also verschiedene Messvorgänge als zusammengehörig bestimmt werden. Ebenso können in diesem Sinne nicht zusammengehörige Messvorgänge bestimmt und damit unterschieden werden. Wenn die Messmarke eine Positionsinformation oder eine Zeitinformation umfasst - wie untenstehend noch näher beschrieben wird - dann kann diese Zuordnung auf einer zeitlichen oder räumlichen Nähe oder Identität beruhen.

Im vorliegenden Beispiel entspricht also die Messmarke 15a der Kornverlustmenge 12a und die Messmarke 15b dem Sensor-Kornverlustwert 14a. Durch einen Abgleich zwischen den jeweiligen Kornverlustmengen 12 und den Sensor-Kornverlustwerten 14 mittels zusammengehöriger Messmarken 15a,b können somit Kalibrierungsdaten bestimmt werden, mit denen der Kornverlustsensor 1 so kalibriert bzw. eingestellt werden kann, dass einem anschließend gemessenen Sensor-Kornverlustwert 14 eine quantitative Aussage zum tatsächlichen Kornverlust zugeordnet werden kann, etwa entsprechend einer Kornverlustmenge 12, diesmal aber ohne erforderliche tatsächliche Messung der Kornverlustmenge. Die Kalibrierungsdaten können insbesondere dazu dienen eine entsprechende Kennlinie für den Kornverlustsensor 1 auszuwählen, z. B. aus einer Reihe an vordefinierten Kennlinien, eine solche vordefinierte Kennlinie anzupassen - und die angepasste Kennlinie auszusuchen - oder eine solche Kennlinie überhaupt und insbesondere neu zu erzeugen.

Dabei kann der Zusammenhang zwischen den Sensor-Kornverlustwerten 14 und den Kornverlustmengen 12 auch von weiteren, insbesondere veränderlichen Größen abhängen, so z. B. von einer Feuchtigkeit des von dem Mähdrescher 2 von dem Feld 11 aufgenommenen Ernteguts oder Strohs. Bevorzugt werden daher während des Erntebetriebs von einem Umgebungssensor 16, hier einem in der Fig. 1 dargestellten Feuchtigkeitssensor 16a, des Mähdreschers 2 Umgebungswerte 17 gemessen, im vorliegenden Ausführungsbeispiel etwa Strohfeuchtigkeitswerte im aufgenommenen Erntegutstrom, und den Umgebungswerten 17 jeweils Messmarken 15c zugeordnet. Analog zu den Kornverlustmengen 12 und den Sensor-Kornverlustwerten 14 ist in der Fig. 3c ein Verlauf gemessener Umgebungswerte 17 - hier beispielhaft Strohfeuchtigkeitswerte - über der Zeitachse 13c mit einer einzelnen beispielhaften Messmarke 15c und dem entsprechenden Umgebungswert 17a dargestellt. Dann ist es von Vorteil, wenn die Kalibrierungsdaten auch basierend auf einem Abgleich der gemessenen Umgebungswerte 17 gemäß der Messmarken 15a-c mit den Kornverlustmengen 12 und/oder mit den Sensor-Kornverlustwerten 14 bestimmt werden. Es ist darauf hinzuweisen, dass die Zeitachsen 13a-d einen Versatz bzw. eine unterschiedliche Skalierung zueinander aufweisen können.

Wie bereits oben festgestellt, ist eine wirtschaftlich besonders bedeutsame Kenngröße der Anteil der Kornverluste an dem gesamten Ertrag an Körnern. Daher ist es bevorzugt, dass die Kalibrierungsdaten dazu eingerichtet sind, die von dem Kornverlustsensor 1 bestimmten Sensor-Kornverlustwerte 14 in einen insbesondere prozentualen Verlustanteil an einem Korngesamtertrag umzurechnen. Damit kann dann unmittelbar festgestellt werden, ob eine diesbezügliche Vorgabe eingehalten wird.

Gemäß einer bevorzugten Variante kann dies erreicht werden, indem von dem Mähdrescher 2 in dem Erntebetrieb Kornertragsmengen 18 gemessen werden. Die Kornertragsmengen 18 können direkt gemessen werden, z. B. über eine Kamera an der Transportanordnung 8, welche Transportanordnung 8 gemäß Fig. 1 etwa durch einen Kornelevator gebildet sein kann. Eine solche Kamera kann auch an dem Korntank 9 angeordnet sein. Es ist in der Fig. 3d ein beispielhafter Verlauf gemessener Kornertragsmengen 18 über der Zeitachse 13d dargestellt. Bei diesen Kornertragsmengen 18 handelt es sich etwa um im Korntank 9 ankommendes Korngut, vorzugsweise abzüglich seiner Nichtkornbestandteile, soweit diese Nichtkornbestandteile z. B. durch einen entsprechenden Sensor ermittelt wurden. Bei einer Messung durch eine Kamera wie oben beschrieben können solche Nichtkornbestandteile auch basierend auf einer Bildverarbeitung herausgerechnet werden. Weiter ist bevorzugt, dass den gemessenen Kornertragsmengen 18 jeweils Messmarken 15d zugeordnet werden und dass die Umrechnung in den Verlustanteil an dem Korngesamtertrag auf den gemessenen Kornertragsmengen 18 basiert. Eine einzelne solche Messmarke 15d mit der entsprechenden Kornertragsmenge 18a ist beispielhaft in der Fig. 3d dargestellt. Bevorzugt werden die gemessenen Kornertragsmengen 18 gemäß der jeweils zugeordneten Messmarken 15d mit den weiteren oben genannten und gemessenen Werten abgeglichen. Alternativ oder zusätzlich zu diesem beschriebenen Bezug auf den Korngesamtertrag können die gemessenen Sensor-Kornverlustwerte 14 in sinngemäß gleicher Weise auf einen Erntegutgesamtdurchsatz bezogen und in einen entsprechenden Verlustanteil umgerechnet werden.

Wie bereits festgestellt ist es für den Vorschlag wesentlich, dass zwei unterschiedliche Messungen gemäß ihrer jeweiligen Messmarken 15a-d abgeglichen und in Bezug gesetzt werden, wodurch sich ein entsprechendes Verhältnis dieser beiden Größen für eine Kalibrierung ermitteln lässt. Bei der Messung der Kornverlustmengen 12 einerseits und der Messung der Sensor-Kornverlustwerte 14 andererseits handelt es sich aber auch um Messungen unter unterschiedlichen Bedingungen. Bevorzugt bestimmt der Kornverlustsensor 1 die Sensor-Kornverlustwerte 14 durch Erfassen eines bewegten Verlustkorngutstroms an dem Mähdrescher 2. Es erfolgt also das Erfassen eines momentanen, verhältnismäßig schnell veränderlichen oder augenblicklichen Wertes, sodass der Messvorgang nicht wiederholt oder zwecks Präzisierung auf einen längeren Zeitraum ausgedehnt werden kann. Dies gilt auch, wenn die Sensor-Kornverlustwerte 14 jeweils - wie oben beschrieben - auf eine Messung über einen ganzen Zeitintervall zurückgehen, da auch jeder einzelne Wert in diesem Zeitintervall augenblicklich ist. Umgekehrt werden die Kornverlustmengen 12 bevorzugt als feste und insbesondere unbewegte Größe gemessen. Da die Kornverlustmengen 12 zum Zeitpunkt der Messung bereits stabil als Verlust und damit statisch vorliegen, kann ihre Messung ggf. zeitaufwändiger und damit genauer erfolgen.

Die Art der Information, welche die Messmarken 15a-d für den Abgleich umfassen, kann dabei unterschiedlich sein. Gemäß einer bevorzugten Variante umfassen die Messmarken 15a-d eine jeweilige Positionsinformation zu einer Position des Mähdreschers 2 bei der jeweiligen Messung. Diese Positionsinformation kann beispielsweise der Position des Mähdreschers 2 bei der jeweiligen Messung oder - speziell bezüglich der Kornverlustmengen 12 - derjenigen Position entsprechen, bei oder an der die Kornverlustmengen 12 hinterlassen wurden. Der Abgleich gemäß der Messmarken 15a-d kann dann eine Zuordnung von gemessenen Werten mit jeweils gleicher Position bedeuten.

Wenn andererseits bekannt ist, dass in der Zeit zwischen einer Messung der Sensor-Kornverlustwerte 14 und dem Hinterlassen der Kornverlustmengen 12 durch eine Fahrbewegung des Mähdreschers 2 ein Positionsversatz stattfindet, welcher hier aus der Anordnung der Messmarken 15a,b in der Fig. 2 hervorgeht, so kann der Abgleich diesen ggf. geschwindigkeitsabhängigen Versatz berücksichtigen. In der Fig. 2 ist darüber hinaus ein entsprechender Positionsversatz der im Erntebetrieb gemessenen Kornertragsmengen 18 gemäß der Messmarke 15d sowie der ggf. gemessenen Umgebungswerte 17 gemäß der Messmarke 15c dargestellt. Entsprechend ist es vorzugsweise so, dass bei dem Abgleich unterschiedliche oben genannte Arten von Versätzen, vorzugsweise alle oben genannten Arten von Versätzen, berücksichtigt werden. Wie sich aus der Fig. 2 ergibt, erfolgt - jeweils bezogen auf die selbe "Stelle" im Erntegutstrom - zeitlich regelmäßig zunächst die Messung der Umgebungswerte 17, bevorzugt bereits im Schrägförderer 4, dann die Messung der Sensor-Kornverlustwerte 14, dann das Hinterlassen der Kornverlustmengen 12 und erst anschließend die Messung der Kornertragsmengen 18, weil die Verarbeitungsdauer bis zum Korntank 9 in der Regel länger dauert als die Strecke bis zum Hinterlassen der Kornverlustmengen. Die Messung der Umgebungswerte 17 erfolgt im vorliegenden Beispiel im Wesentlichen gleichzeitig zu der Messung der Sensor-Kornverlustwerte 14. Im Einzelfall kann der Versatz aber auch eine andere Reihenfolge des Messmarken 15a-d bedeuten oder es mag gar kein Versatz vorliegen. In der Fig. 2 sind daneben beispielhaft noch weitere Messmarkengruppen 15e dargestellt, welche zuvor vorgenommenen Messungen entsprechen, und deren jeweilige Messmarken einen entsprechend gleichen Versatz untereinander aufweisen.

Es können die Positionsinformationen der Messmarken 15b, welche den Sensor-Kornverlustwerten 14 zugeordnet sind, im Erntebetrieb durch ein elektronisches Positionierungssystem 19, insbesondere ein GPS-Modul 19a des Mähdreschers 2, erzeugt werden. Das GPS-Modul 19a ist zum Signalempfang von einem Satellitensystem 19b eingerichtet. Bevorzugt ist dabei, dass die Positionsinformationen dieser Messmarken 15b der jeweiligen Position des Mähdreschers 2 beim Messen der Sensor-Kornverlustwerte 14 entsprechen. Insbesondere kann die obige Positionsinformation eine Globalkoordinateninformation, z. B. eines geografischen Koordinatensystems, umfassen oder dieser entsprechen. Diese Globalkoordinateninformation kann eine von einem GPS-System bereitgestellte Koordinateninformation sein.

Auf diese Weise kann auch eine ggf. orts- bzw. positionsabhängige Kalibrierung des Kornverlustsensors 1 berücksichtigt werden, speziell wenn etwa die Kalibrierung von Eigenschaften des Feldes 11 abhängig ist, welche Eigenschaften sich aber nicht ohne Weiteres mit den Sensoren am Mähdrescher 2 erfassen lassen. So ist bevorzugt, dass die Kalibrierungsdaten zu einer positionsabhängigen Kalibrierung des Kornverlustsensors 1 eingerichtet sind. Kalibrierungsdaten für eine jeweilige Position können dann aus dem Abgleich eines Sensor-Kornverlustwertes 14 und einer Kornverlustmenge 12 für die jeweilige Messmarke 15a, b entsprechend der jeweiligen Position bestimmt werden. Sofern nicht für jede Position ein zugeordneter solcher Messwert vorliegt, weil etwa die Kornverlustmengen 12 nur an diskreten Positionen gemessen werden, kann z. B. eine Interpolation oder eine sonstige Näherung der Kornverlustmengen 12 für die übrigen Positionen zur Bestimmung der Kalibrierungsdaten für die positionsabhängige Kalibrierung vorgenommen werden.

Alternativ oder zusätzlich zu einer solchen Positionsinformation der Messmarken 15a-d können diese Messmarken 15a-d auch Zeitinformationen berücksichtigen. Daher ist es bevorzugt, dass die Messmarken 15a-d eine jeweilige Zeitinformation zum Messzeitpunkt - also demjenigen Zeitpunkt, zu dem die jeweilige Messung erfolgt ist - umfassen. Bei dieser Zeitinformation kann es sich insbesondere um einen Zeitstempel handeln. Auch hier kann der Abgleich der Kornverlustmengen 12 mit den Sensor-Kornverlustwerten 14 gemäß der Messmarken 15a, b einen Prozesszeitversatz zwischen der Messung der Sensor-Kornverlustwerte 14 durch den Kornverlustsensor 1 und dem Hinterlassen der Kornverlustmengen 12 berücksichtigen.

Für den obigen Abgleich können die gemessenen Kornverlustmengen 12 in unterschiedlichen Einheiten vorliegen. Gemäß einer bevorzugten Variante werden die Kornverlustmengen 12 als Anzahl von Körnern pro Fläche, als Volumen von Körnern pro Fläche und/oder als Kornmasse pro Fläche bereitgestellt.

Das vorschlagsgemäße Verfahren kann einerseits grundsätzlich vollständig in dem Mähdrescher 2 ablaufen. So könnten auch die Kornverlustmengen 12 durch eine an dem Mähdrescher 2 angeordnete aber auf das Feld 11 gerichtete - hier nicht dargestellte - Feldkamera gemessen werden. Insbesondere wenn die hinterlassenen Kornverlustmengen 12 von einer von dem Mähdrescher 2 separaten Vorrichtung gemessen werden, können gemäß einer bevorzugten Variante die Kornverlustmengen 12 und die ihnen zugeordneten Messmarken 15a vorzugsweise drahtlos an den Mähdrescher 2 bzw. an die Kontrolleinrichtung 21 übertragen werden. Gemäß einer weiteren Variante ist bevorzugt, dass wesentliche Schritte des vorschlagsgemäßen Verfahrens zentral und damit außerhalb des Mähdreschers 2 durchgeführt werden. So ist bevorzugt vorgesehen, dass die Sensor-Kornverlustwerte 14 und die ihnen zugeordneten Messmarken 15b im Erntebetrieb - vorzugsweise bereits bei Erfassung der Sensor-Kornverlustwerte 14 - drahtlos an einen Zentralrechner 20 übertragen werden. Neben den Sensor-Kornverlustwerten 14 und den ihnen zugeordneten Messmarken 15b können aber auch die Kornertragsmengen 18, ebenso mit den ihnen zugeordneten Messmarken 15d, sowie die Umgebungswerte 17 mit ihren zugeordneten Messmarken 15c und ggf. weitere gemessene Werte drahtlos an den Zentralrechner 20 übertragen werden. Diese einzelnen gemessenen Werte mit den zugeordneten Messmarken 15b-d, welche wie oben beschrieben vorzugsweise eine Zeitinformation und/oder eine Positionsinformation umfassen, können dann in der Art eines Vektors, welcher hier als Signalvektor bezeichnet werden kann, zusammengefasst werden.

Diese Übertragung kann von einer Mobilfunkvorrichtung 20a an dem Mähdrescher 2 vorgenommen werden und insbesondere dazu dienen, dass der Abgleich der Kornverlustmengen 12 mit den Sensor-Kornverlustwerten 14 gemäß der Messmarken 15a, b in dem Zentralrechner 20 erfolgt. Dies bietet sich insbesondere dann an, wenn die Messung der Kornverlustmengen 12 unabhängig von dem Mähdrescher 2 erfolgt, wie untenstehend noch beschrieben wird. Weitergehend kann auch das Bestimmen der Kalibrierungsdaten für den Kornverlustsensor 1 in dem Zentralrechner 20 erfolgen. Alternativ kann das Bestimmen der Kalibrierungsdaten für den Kornverlustsensor 1 auch in dem Mähdrescher 2 bzw. in der Kontrolleinrichtung 21 erfolgen.

Bezüglich der Messung der Kornverlustmengen 12 sieht eine erste Variante vor, dass die Messung der Kornverlustmengen 12 von dem Mähdrescher 2 ausgelöst wird und der Mähdrescher 2 den gemessenen Kornverlustmengen 12 die jeweilige Messmarke 15a zuordnet. Insbesondere kann dieses Auslösen und die Zuordnung der jeweiligen Messmarke 15a durch eine Kontrolleinrichtung 21 des Mähdreschers 2 erfolgen. Auf diese Weise kann ein definierter zeitlicher oder örtlicher Versatz zu der Messung der Sensor-Kornverlustwerte 14 besonders einfach erreicht werden. Dabei kann trotz dieses Auslösens durch den Mähdrescher 2 bzw. dessen Kontrolleinrichtung 21 die eigentliche Messung durch eine von dem Mähdrescher 2 separate Anordnung erfolgen.

Eine zweite diesbezügliche Variante sieht vor, dass die Messung der Kornverlustmengen 12 von einer - hier nicht dargestellten - Messanordnung, welche separat von dem Mähdrescher 2 ist und bei welcher es sich beispielsweise um ein separates Fahrzeug mit einem entsprechenden Sensor handeln kann, ausgelöst wird und die Messanordnung den gemessenen Kornverlustmengen 12 die jeweilige Messmarke 15a zuordnet. Diese Trennung erlaubt es, die Messung der Kornverlustmengen 12 insbesondere zeitlich unabhängig von dem Erntebetrieb des Mähdreschers 2 auszuführen. Die gemessenen Kornverlustmengen 12 können dann ebenfalls drahtlos gemeinsam mit den zugeordneten Messmarken 15a an den Zentralrechner 20 übertragen werden und dazu zu einem sogenannten Datenvektor zusammengefasst werden. Alternativ und insbesondere wenn der Abgleich in dem Mähdrescher 2 stattfindet, kann dieser Datenvektor bzw. die von ihm umfassten Daten auch drahtlos an den Mähdrescher 2 übertragen werden.

Eine bevorzugte Ausführungsform sieht zur Messung der Kornverlustmengen 12 die Verwendung von Prüfschalen 22 vor. Solche grundsätzlich aus dem Stand der Technik bekannten und hier nicht im Detail gezeigten Prüfschalen 22 dienen zur Messung der tatsächlichen Verlustkörner. Dazu weisen sie z. B. Aufnahmekästchen für die Verlustkörner auf, welche Aufnahmekästchen sich durch die Verlustkörner sukzessive füllen. Aus dem Befüllgrad dieser Aufnahmekästchen kann dann durch eine Sichtprüfung die Kornverlustmenge 12 ermittelt werden. Es sind auch weitere Konstruktionsvarianten solcher Prüfschalen denkbar. Daher ist es bevorzugt, dass die Kornverlustmengen 12 in einer jeweiligen Prüfschale 22 aufgenommen gemessen werden. Zur Aufnahme der Verlustkörner ist vorgesehen, dass die Prüfschale 22 unter bzw. hinter dem Mähdrescher 2 im Bereich des Heckendes der Abscheideanordnung 6 auf dem Grund des Feldes 11 liegt. Zur derartigen Platzierung der Prüfschale 22 gibt es verschiedene Möglichkeiten.

Um die Mitwirkung einer weiteren Person, welche sich neben dem Mähdrescher 2 aufhält, bei dieser Platzierung der Prüfschale 22 entbehrlich zu machen, kann insbesondere vorgesehen sein, dass die jeweilige Prüfschale 22 bis zu einem Ablegen - bzw. bis zu einem Abwurf der Prüfschale 22 - an dem Mähdrescher 2 - hier gemäß der Fig. 1 im Bereich des Schneidwerks 3 - angeordnet ist und das Ablegen der Prüfschale 22 von dem Mähdrescher 2 bzw. durch die Kontrolleinrichtung 21 des Mähdreschers 2 ausgelöst wird. Dadurch fällt die Prüfschale 22 auf den Boden des Feldes 11. Der Mähdrescher 2 fährt dann im Erntebetrieb über die abgelegte Prüfschale 22, sodass diese dann in den oben genannten Bereich des Heckendes der Abscheideanordnung 6 gelangt.

Alternativ zu der Anordnung der Prüfschale 22 am Mähdrescher 2 kann aber auch die Prüfschale 22 zur Aufnahme der Kornverlustmengen 12 unabhängig vom Mähdrescher 2 platziert werden und dabei insbesondere manuell, das heißt beispielsweise durch die obige Person neben dem Mähdrescher 2.

Die vorschlagsgemäß bestimmten Kalibrierungsdaten können einerseits zur Kalibrierung oder Einstellung des selben Kornverlustsensors 1 verwendet werden, welcher die den Kalibrierungsdaten zugrunde liegenden Sensor-Kornverlustwerte 14 ermittelt hat. Bevorzugt können die Kalibrierungsdaten aber auch zur Kalibrierung eines Kornverlustsensors an einem weiteren Mähdrescher 2a verwendet werden. Dann ist bevorzugt vorgesehen, dass die bestimmten Kalibrierungsdaten gespeichert - und zwar vorzugsweise in dem Zentralrechner 20 gespeichert - und dem weiteren Mähdrescher 2a, welcher beispielhaft in der Fig. 2 dargestellt ist, bereitgestellt werden. Hierzu kann vorgesehen sein, dass die bestimmten Kalibrierungsdaten von dem Zentralrechner 20 an den weiteren Mähdrescher 2 insbesondere drahtlos übertragen werden, etwa durch eine Mobilfunkvorrichtung 20b des weiteren Mähdreschers 2a. Wenn das Bestimmen der Kalibrierungsdaten - wie oben beschrieben - für den Kornverlustsensor 1 in dem Zentralrechner 20 erfolgt, dann kann dieses Bestimmen auch auf einem Abgleich der gemessenen Kornverlustmengen 12 mit den gemessenen Sensor-Kornverlustwerten 14 von mehreren Mähdreschern beruhen. Auf diese Weise kann eine Vergrößerung der Datengrundlage für die Bestimmung der Kalibrierungsdaten und damit eine noch genauere Kalibrierung erreicht werden.

### Bezugszeichenliste

- 1: Kornverlustsensor
- 2: Mähdrescher
- 3: Schneidwerk
- 4: Schrägförderer
- 5: Dreschanordnung
- 6: Abscheideanordnung
- 6a: Schüttlerhorden
- 7: Reinigungsanordnung
- 8: Transportanordnung
- 9: Korntank
- 10: Heck
- 11: Feld
- 12, 12a: Kornverlustmengen
- 13a-d: Zeitachse
- 14, 14a: Sensor-Kornverlustwerte
- 15a-e: Messmarken
- 16,16a: Umgebungssensor
- 17,17a: Umgebungswerte
- 18,18a: Kornertragsmengen
- 19: Elektronisches Positionierungssystem
- 19a: GPS-Modul
- 19b: Satellitensystem
- 20: Zentralrechner
- 20a, b: Mobilfunkvorrichtung
- 21: Kontrolleinrichtung
- 22: Prüfschalen

## Patentansprüche

1. Verfahren zur Bestimmung von Kalibrierungsdaten für einen Kornverlustsensor (1) an einem Mähdrescher (2), wobei Kornverlustmengen (12) gemessen werden, welche von dem Mähdrescher (2) bei einem Erntebetrieb hinterlassen wurden, und wobei von dem Kornverlustsensor (1) während des Erntebetriebs Sensor-Kornverlustwerte (14) gemessen Werden,
**dadurch gekennzeichnet,**
**dass** den gemessenen Kornverlustmengen (12) und den gemessenen Sensor-Kornverlustwerten (14) jeweils Messmarken (15a, b) zugeordnet werden und dass basierend auf einem Abgleich der gemessenen Kornverlustmengen (12) mit den gemessenen Sensor-Kornverlustwerten (14) gemäß der Messmarken (15a, b) die Kalibrierungsdaten für den Kornverlustsensor (1) bestimmt werden, wobei die Messmarken (15a-d) eine jeweilige Positionsinformation zu einer Position des Mähdreschers (2) bei der jeweiligen Messung und eine jeweilige Zeitinformation zum Messzeitpunkt umfassen und dass der Abgleich der Kornverlustmengen (12) mit den Sensor-Kornverlustwerten (14) gemäß der Messmarken (15a, b) einen Prozesszeitversatz zwischen der Messung der Sensor-Kornverlustwerte (14) durch den Kornverlustsensor (1) und dem Hinterlassen der Kornverlustmengen 12) berücksichtigt.

2. Verfahren nach Anspruch 1, **dadurch gekennzeichnet, dass** die Kalibrierungsdaten dazu eingerichtet sind, die von dem Kornverlustsensor (1) bestimmten Sensor-Kornverlustwerte (14) in einen insbesondere prozentualen Verlustanteil an einem Korngesamtertrag umzurechnen.

3. Verfahren nach Anspruch 2, **dadurch gekennzeichnet, dass** von dem Mähdrescher (2) im Erntebetrieb Kornertragsmengen (18) gemessen werden, vorzugsweise, wobei den gemessenen Kornertragsmengen (18) jeweils Messmarken (15d) zugeordnet werden, und dass die Umrechnung in den Verlustanteil an dem Korngesamtertrag auf den gemessenen Kornertragsmengen (18) basiert.

4. Verfahren nach einem der Ansprüche 1 bis 3, **dadurch gekennzeichnet, dass** der Kornverlustsensor (1) die Sensor-Kornverlustwerte (14) durch Erfassen eines bewegten Verlustkorngutstroms an dem Mähdrescher (2) bestimmt, vorzugsweise, dass die Kornverlustmengen (12) als feste, insbesondere unbewegte, Größe gemessen werden.

5. Verfahren nach Anspruch 4, **dadurch gekennzeichnet, dass** die Positionsinformationen der Messmarken (15b), welche den Sensor-Kornvenustwerten (14) zugeordnet sind, im Erntebetrieb durch ein elektronisches Positionierungssystem (19), insbesondere ein GPS-Modul (19a), des Mähdreschers (2) erzeugt werden, vorzugsweise, der jeweiligen Position des Mähdreschers (2) beim Messen der Sensor-Kornverlustwerte (14) entsprechen.

6. Verfahren nach Anspruch 4 oder 5, **dadurch gekennzeichnet, dass** die Kalibrierungsdaten zu einer positionsabhängigen Kalibrierung des Kornverlustsensors (1) eingerichtet sind, vorzugsweise, dass die Kalibrierungsdaten für eine jeweilige Position aus dem Abgleich eines Sensor-Kornverlustwertes (14) und einer Kornverlustmenge (12) für die jeweilige Messmarke (15a, b) entsprechend der jeweiligen Position bestimmt werden.

7. Verfahren nach einem der Ansprüche 1 bis 6, **dadurch gekennzeichnet, dass** die Kornverlustmengen (12) als Anzahl von Körnern pro Fläche, als Volumen von Körnern pro Fläche und/oder als Kornmasse pro Fläche bereitgestellt werden.

8. Verfahren nach einem der Ansprüche 1 bis 7, **dadurch gekennzeichnet, dass** die Sensor-Kornverlustwerte (14) und die ihnen zugeordneten Messmarken (15b) im Erntebetrieb, vorzugsweise beim Messen der Sensor-Kornvertustwerte (14), drahtlos an einen Zentralrechner (20) übertragen werden, insbesondere, dass der Abgleich der Kornverlustmengen (12) mit den Sensor-Kornverlustwerten (14) gemäß der Messmarken (15a, b), weiter insbesondere, das Bestimmen der Kalibrierungsdaten für den Kornverlustsensor (1), in dem Zentralrechner (20) erfolgt.

9. Verfahren nach einem der Ansprüche 1 bis 8, **dadurch gekennzeichnet, dass** die Messung der Kornverlustmengen (12) von dem Mähdrescher (2) ausgelöst wird und der Mähdrescher (2) den gemessenen Kornverlustmengen (12) die jeweilige Messmarke (15a) zuordnet.

10. Verfahren nach einem der Ansprüche 1 bis 9, **dadurch gekennzeichnet, dass** die Messung der Kornverlustmengen (12) von einer Messanordnung, welche separat von dem Mähdrescher (2) ist, ausgelöst wird und die Messanordnung den gemessenen Kornverlustmengen (12) die jeweilige Messmarke (15a) zuordnet.

11. Verfahren nach einem der Ansprüche 1 bis 10, **dadurch gekennzeichnet, dass** die Kornverlustmengen (12) in einer jeweiligen Prüfschale (22) aufgenommen gemessen werden, vorzugsweise, dass die jeweilige Prüfschale (22) bis zu einem Ablegen an dem Mähdrescher (2) angeordnet ist und das Ablegen der Prüfschale (22) von dem Mähdrescher (2) ausgelöst wird.

12. Verfahren nach Anspruch 11, **dadurch gekennzeichnet, dass** die Prüfschale (22) zur Aufnahme der Kornverlustmengen (12) unabhängig vom Mähdrescher (2), insbesondere manuell, platziert wird.

13. Verfahren nach einem der Ansprüche 1 bis 12, **dadurch gekennzeichnet, dass** die bestimmten Kalibrierungsdaten gespeichert und einem weiteren Mähdrescher bereitgestellt werden, vorzugsweise, von dem Zentralrechner 20 an den weiteren Mähdrescher 2a insbesondere drahtlos übertragen werden.

## Claims

1. A method of determining calibration data for a grain loss sensor (1) on a combine harvester (2), wherein grain loss quantities (12) which were left behind by the combine harvester (2) in a harvesting operation are measured and wherein sensor grain loss values (14) are measured by the grain loss sensor (1) during the harvesting operation,
**characterised in that** measurement marks (15a, b) are respectively associated with the measured grain loss quantities (12) and the measured sensor grain loss values (14) and that the calibration data for the grain loss sensor (1) are determined based on a comparison of the measured grain loss quantities (12) with the measured sensor grain loss values (14) in accordance with the measurement marks (15a, b), wherein the measurement marks (15a-d) include a respective item of position information relating to a position of the combine harvester (2) upon the respective measurement and a respective item of time information relating to the measurement time and the comparison of the grain loss quantities (12) with the sensor grain loss values (14) in accordance with the measurement marks (15a, b) takes account of a process time displacement between measurement of the sensor grain loss values (14) by the grain loss sensor (1) and the grain loss quantities (12) being left behind.

2. A method according to claim 1 **characterised in that** the calibration data are adapted to convert the sensor grain loss values (14) determined by the grain loss sensor (1) into an in particular percentage loss proportion of an overall grain yield.

3. A method according to claim 2 **characterised in that** grain yield quantities (18) are measured by the combine harvester (2) in the harvesting operation, preferably wherein measurement marks (15b) are respectively associated with the measured grain yield quantities (18) and that conversion into the loss proportion of the overall grain yield is based on the measured grain yield quantities (18).

4. A method according to one of claims 1 to 3 **characterised in that** the grain loss sensor (1) determines the sensor grain loss values (14) by detecting a moving loss grain flow at the combine harvester (2), and preferably that the grain loss quantities (12) are measured as a fixed, in particular unmoving, parameter.

5. A method according to claim 4 **characterised in that** the items of position information of the measurement marks (15b) which are associated with the sensor grain loss values (14) are produced in the harvesting operation by an electronic positioning system (19), in particular a GPS module (19a), of the combine harvester (2), and preferably correspond to the respective position of the combine harvester (2) upon measurement of the sensor grain loss values (14).

6. A method according to claim 4 or claim 5 **characterised in that** the calibration data are designed for position-dependent calibration of the grain loss sensor (1), and preferably the calibration data for a respective position are determined from the comparison of a sensor grain loss value (14) and a grain loss quantity (12) for the respective measurement mark (15a, b) corresponding to the respective position.

7. A method according to one of claims 1 to 6 **characterised in that** the grain loss quantities (12) are provided as a number of grains per surface area, as a volume of grains per surface area and/or as a grain mass per surface area.

8. A method according to one of claims 1 to 7 **characterised in that** the sensor grain loss values (14) and the measurement marks (15b) associated therewith are wirelessly transmitted to a central computer (20) in the harvesting operation, preferably upon measurement of the sensor grain loss values (14), and in particular comparison of the grain loss quantities (12) with the sensor grain loss values (14) in accordance with the measurement marks (15a, b), further in particular the step of determining the calibration data for the grain loss sensor (1), is effected in the central computer (20).

9. A method according to one of claims 1 to 8 **characterised in that** measurement of the grain loss quantities (12) is triggered by the combine harvester (2) and the combine harvester (2) associates the respective measurement mark (15a) with the measured grain loss quantities (12).

10. A method according to one of claims 1 to 9 **characterised in that** measurement of the grain loss quantities (12) is triggered by a measurement arrangement which is separate from the combine harvester (2) and the measurement arrangement associates the respective measurement mark (15a) with the measured grain loss quantities (12).

11. A method according to one of claims 1 to 10 **characterised in that** the grain loss quantities (12) are measured received in a respective test pan (22) and preferably the respective test pan (22) is arranged until being set down on the combine harvester (2) and the operation of setting down the test pan (22) is triggered by the combine harvester (2).

12. A method according to claim 11 **characterised in that** the test pan (22) for receiving the grain loss quantities (12) is placed independently of the combine harvester (2), in particular manually.

13. A method according to one of claims 1 to 12 **characterised in that** the determined calibration data are stored and provided for a further combine harvester and are preferably in particular wirelessly transmitted from the central computer (20) to the further combine harvester (2a).

## Revendications

1. Procédé de détermination de données d'étalonnage pour un capteur de pertes de grain (1) sur une moissonneuse-batteuse (2), des quantités de perte de grain (12) étant mesurées, lesquelles sont laissées en arrière par la moissonneuse-batteuse (2) lors d'une récolte, et des valeurs de perte de grain de capteur (14) étant mesurées par le capteur de pertes de grain (1) lors de la récolte, **caractérisé en ce qu'**aux quantités de perte de grain mesurées (12) et aux valeurs de perte de grain de capteur mesurées (14) sont attribués respectivement des repères de mesure (15a, b), et **en ce que** les données d'étalonnage pour le capteur de pertes de grain (1) sont déterminées sur la base d'une comparaison des quantités de perte de grain mesurées (12) avec les valeurs de perte de grain de capteur mesurées (14) selon les repères de mesure (15a, b), les repères de mesure (15a-d) comprenant une information de position respective sur une position de la moissonneuse-batteuse (2) lors de la mesure respective, la comparaison des quantités de perte de grain (12) avec les valeurs de perte de grain de capteur (14) selon les repères de mesure (15a, b) tenant compte d'un décalage temporel de processus entre la mesure des valeurs de perte de grain de capteur (14) par le capteur de perte de grain (1) et le moment où les quantités de perte de grain (12) sont laissées en arrière.

2. Procédé selon la revendication 1, **caractérisé en ce que** les données d'étalonnage sont agencées pour convertir les valeurs de perte de grain de capteur (14) déterminées par le capteur de perte de grain (1) en une proportion de perte, en particulier en pourcentage, sur un rendement total en grain.

3. Procédé selon la revendication 2, **caractérisé en ce que** des quantités de rendement en grain (18) sont mesurées par la moissonneuse-batteuse (2) lors de la récolte, aux quantités de rendement en grain mesurées (18) étant attribués respectivement des repères de mesure (15d), et **en ce que** la conversion en proportion de perte sur le rendement total en grain est basée sur les quantités de rendement en grain mesurées (18).

4. Procédé selon une des revendications 1 à 3, **caractérisé en ce que** le capteur de pertes de grain (1) détermine les valeurs de perte de grain de capteur (14) en détectant un flux mobile de grain perdu sur la moissonneuse-batteuse (2), de préférence **en ce que** les quantités de perte de grain (12) sont mesurées en tant que grandeur fixe, en particulier immobile.

5. Procédé selon la revendication 4, **caractérisé en ce que** les informations de position des repères de mesure (15b) attribués aux valeurs de perte de grain de capteur (14) sont générées lors de la récolte par un système de positionnement électronique (19), en particulier par un module GPS (19a), de la moissonneuse-batteuse (2), de préférence correspondent à la position respective de la moissonneuse-batteuse (2) lors de la mesure des valeurs de perte de grain de capteur (14).

6. Procédé selon la revendication 4 ou 5, **caractérisé en ce que** les données d'étalonnage pour un étalonnage du capteur de pertes de grain (1) en fonction de la position sont agencées, de préférence, de façon que les données d'étalonnage pour une position respective soient déterminées à partir de la comparaison d'une valeur de perte de grain de capteur (14) et d'une quantité de perte de grain (12) pour le repère de mesure respectif (15a, b) correspondant à la position respective.

7. Procédé selon une des revendications 1 à 6, **caractérisé en ce que** les quantités de perte de grain (12) sont fournies sous la forme d'un nombre de grains par surface, d'un volume de grains par surface et/ou d'une masse de grain par surface.

8. Procédé selon une des revendications 1 à 7, **caractérisé en ce que** les valeurs de perte de grain de capteur (14) et les repères de mesure (15b) qui leur sont associés sont transmis sans fil, lors de la récolte, de préférence lors de la mesure des valeurs de perte de grain de capteur (14), à un calculateur central (20), en particulier **en ce que** la comparaison des quantités de perte de grain (12) avec les valeurs de perte de grain de capteur (14) selon les repères de mesure (15a, b) et, en particulier aussi, la détermination des données d'étalonnage pour le capteur de pertes de grain (1) s'effectuent dans le calculateur central (20).

9. Procédé selon une des revendications 1 à 8, **caractérisé en ce que** la mesure des quantités de perte de grain (12) est déclenchée par la moissonneuse-batteuse (2), et la moissonneuse-batteuse (2) associe le repère de mesure respectif (15a) aux quantités de perte de grain mesurées (12).

10. Procédé selon une des revendications 1 à 9, **caractérisé en ce que** la mesure des quantités de perte de grain (12) est déclenchée par un agencement de mesure qui est séparé de la moissonneuse-batteuse (2), et l'agencement de mesure associe le repère de mesure respectif (15a) aux quantités de perte de grain mesurées (12).

11. Procédé selon une des revendications 1 à 10, **caractérisé en ce que** les quantités de perte de grain (12) sont mesurées en étant recueillies dans une cuvette de contrôle respective (22), de préférence **en ce que** la cuvette de contrôle respective (22) est disposée sur la moissonneuse-batteuse (2) jusqu'à ce qu'elle en soit déposée, et **en ce que** la dépose de la cuvette de contrôle (22) est déclenchée par la moissonneuse-batteuse (2).

12. Procédé selon la revendication 11, **caractérisé en ce que** la cuvette de contrôle (22) destinée à recueillir les quantités de perte de grain (12) est positionnée indépendamment de la moissonneuse-batteuse (2), en particulier manuellement.

13. Procédé selon une des revendications 1 à 12, **caractérisé en ce que** les données d'étalonnage déterminées sont mémorisées et fournies à une autre moissonneuse-batteuse, de préférence transmises à l'autre moissonneuse-batteuse 2a, en particulier sans fil, par le calculateur central 20.
